# EUROPÄISCHE PATENTANMELDUNG

(11) **EP 3 064 193 A1**
(43) Veröffentlichungstag der Anmeldung: **07.09.2016**
(21) Anmeldenummer: 15158023.0
(22) Anmeldetag: 06.03.2015
(51) Int. Cl.: A61K 6/02, B29C 67/00, B33Y 10/00, B33Y 40/00, B33Y 70/00, B33Y 80/00

(54) **Kartusche mit Kompositmaterial**

(71) Anmelder: Coltène/Whaledent AG, 9450 Altstaetten (CH)
(72) Erfinder: Barth, Werner, 8353 Elgg (CH); Schaufelberger, Martin, 8872 Weesen (CH); Sutter Menghini, Simon, 7000 Chur (CH)
(74) Vertreter: Hepp Wenger Ryffel AG

(57) **Zusammenfassung**

Kartusche (1) für einen 3D-Drucker, wobei die Kartusche (1) eine Düse aufweist oder derart ausgebildet ist, dass eine vordefinierte Düse ausbildbar ist. Die Kartusche (1) enthält ein dentales Kompositmaterial, wobei das Kompositmaterial eine aushärtbare, insbesondere lichtaushärtbare, Matrix und nur Füllstoffe mit einer maximalen Partikelgrösse von < 5 µm umfasst. Das dentale Kompositmaterial weist im nicht-ausgehärteten Zustand eine Viskosität im Bereich von 1 bis 10'000 Pa*s, bevorzugt von 10 bis 2000 Pa*s, besonders bevorzugt 50 bis 800 Pa*s, auf.

## Beschreibung

Die Erfindung betrifft eine Kartusche für einen 3D-Drucker, ein Stützmaterial für den 3D-Druck von Dentalteilen aus Kompositmaterial, sowie ein Verfahren zum Aushärten von Kompositmaterial und ein Verfahren zur generativen Herstellung von Zahnersatzteilen.

Mit 3D-Druck werden allgemein alle Herstellungsverfahren bezeichnet, welche ein Bauteil durch schichtweises Aneinanderfügen von Materialportionen aufbauen. Es sind heute viel unterschiedliche 3D-Druckverfahren bekannt. Einige Verfahren verwenden Licht oder Laser, um geometrische Strukturen aus einem photosensitiven Harz zu verfestigen. Dazu gehören z.B. die Stereolithographie (STL) oder das Direct Light Processing (DLP).

Die Verwendung von Druckköpfen, wie sie ähnlich im konventionellen Tintenstrahldruck eingesetzt werden, ist bekannt. Dabei werden photosensitive und niedrigviskose Flüssigkeiten als Tröpfchen schichtweise abgelegt und mittels Bestrahlung ausgehärtet. Die Verfahren werden z.B. je nach Equipment des Herstellers als Multi Jet Modelling (MJM) oder Polyjet Printing (PJP) bezeichnet.

In einer Abwandlung davon kann eine photosensitive Flüssigkeit (Tinte, Binder) in ein Pulverbett gespritzt werden, um Pulverpartikel gezielt zu verkleben und schichtweise zu einem Bauteil zu verbinden. Ein Beispiel dafür ist das sogenannte ColorJet Printing (CJP). Entweder ist der Binder selbst eingefärbt oder Binder und Farbpigmente werden mittels unterschiedlicher Düsen abgelegt. In anderen Verfahren wird eine viskose Flüssigkeit als Strang extrudiert und dieser Schichtweise auf eine Bauplattform deponiert. Bei dem eingesetzten Material kann es sich um ein geschmolzenes polymerbasiertes Material handeln oder um eine Paste aus einer Flüssigkeit/Harz-Feststoff Mischung. Die Aushärtung des Bauteils kann bei der Verwendung von Thermoplasten durch Phasenumwandlung (Erstarren) oder bei der Verwendung von Harzsystemen durch Bestrahlung mit Photoinitiatoren erfolgen. Beispiele sind das Fused Deposition Modelling (FDM) oder 3D Plotting.

Die Oberflächenrauhigkeit ist als Folge der Schichtung je nach dem verwendeten Verfahren sehr unterschiedlich. Die meisten Verfahren verlangen eine Nachbehandlung, wie z.B. das Entfernen von Hilfsmaterial/Stützmaterial. Abhängig von der Qualität des Hilfsmaterials kann dieses durch Ausschmelzen, mechanisches Abbrechen oder Strahlen oder durch Lösen in einem Bad erfolgen. Andere mögliche Nachbehandlungen sind bei photosensitiven Harzen eine Nachhärtung mit Licht und/oder Wärme, Harzinfusion zum Schliessen von Stufen, oder Lackieren.

Für dentale Anwendungen werden heute bereits verschieden Verfahren eingesetzt, z.B. SLM für Metallgerüste von herausnehmbaren Prothesen, MJM für Modelle und Bohrschablonen und STL für Provisorien.

Nachteilig an den vorgängig beschriebenen Verfahren ist jedoch, dass es bisher nicht gelungen ist, Zahnersatzteile wie z.B. Brücken, Kronen, Inlays, Onlays, Veneers mit 3D-Druck Verfahren herzustellen, welche die in gängigen Normen geforderten physikalischen, mechanischen und chemischen Eigenschaften erfüllen. Des Weiteren sind auch ästhetische Aspekte damit bislang nicht verwirklicht.

Die gewünschte Ästhetik verlangt zudem häufig den Einsatz von mehreren Farben in einem Bauteil, wodurch die heute bekannten Verfahren mit einem monomeren Ausgangsmaterial ausscheiden. Um die notwendige Festigkeit und Steifigkeit für die Aufnahme von auftretenden Kaukräften, für eine ausreichende Abrasionsbeständigkeit und für eine vernünftige Lebensdauer des Zahnersatzes zu erfüllen, müssen verstärkte Polymere, auch bekannt als Komposite, eingesetzt werden.

EP 1 240 878 B1 beschreibt die Verwendung von Kunststoffmaterial im 3D-Druck von Zahnersatzteilen. Ein vermindertes Verstopfen einer Düse in einer Düsenanordnung wird durch eine Blende erreicht, welche die Düse vor Licht der Aushärtungswellenlänge abschirmt. Des Weiteren ist die Verwendung eines polymerisierbaren Kunststoffes offenbart, welcher eine solche Viskosität aufweist, dass die Verarbeitung des Kunststoffes mit der Düsenanordnung in unpolymerisiertem Zustand erfolgen kann.

EP 1 243 231 B1 offenbart ein Verfahren, in welchem hochviskose bzw. gefüllte Ausgangsmaterialien in 3D-Druckverfahren eingesetzt werden. Die Ablage von Mikrosträngen oder Mikrotropfen ist damit möglich. Die Verstärkungen in Form von Fasern oder Partikeln führen im Allgemeinen dazu, dass solche Komposite eine hohe Viskosität aufweisen. Dies führt jedoch zu vergleichsweise hohen Auspressdrücken der Kartuschen und Düsen und zu einem Verstopfen der Düse durch die Verstärkungen. Ein zuverlässiges und kostengünstiges Drucken von Zahnersatzteilen ist daher mit den im Stand der Technik beschriebenen Verfahren nicht möglich. Das Austauschen des Druckkopfes bzw. der Düse des Druckkopfes bedeutet zudem einen erheblichen Kostenfaktor.

Es ist daher Aufgabe der Erfindung, die Nachteile des Stands der Technik zu überwinden. Insbesondere ist es Aufgabe der Erfindung, eine Kartusche für einen 3D-Drucker bereitzustellen, welche den 3D-Druck von Zahnersatzteilen ermöglicht und dabei praktische und ästhetische Vorteile realisiert. Weitere Aspekte der Erfindung betreffen das Bereitstellen i) eines Stützmaterials für die Lichtpolymerisation eines Kompositmaterials, ii) eines Verfahrens zur Aushärtung von Kompositmaterial und iii) eines Verfahrens zur generativen Herstellung von Zahnersatzteilen.

Die Erfindung betrifft eine Kartusche für einen 3D-Drucker, wobei die Kartusche eine Düse aufweist oder derart ausgebildet ist, dass eine vordefinierte Düse ausbildbar ist, und wobei die Kartusche ein dentales Kompositmaterial enthält. Das Kopmpositmaterial umfasst eine aushärtbare, insbesondere lichtaushärtbare, Matrix, und nur Füllstoffe mit einer maximalen Partikelgrösse von < 5 µm. Das dentale Kompositmaterial weist im nicht-ausgehärtetem Zustand eine Viskosität im Bereich von 1 - 10'000 Pa*s, bevorzugt von 10 - 2000 Pa*s, besonders bevorzugt 50 - 800 Pa*s auf, insbesondere gemäss Bestimmung der Viskosität im Rheometer wie nachstehend in den Ausführungsbeispielen erläutert.

Auf diese Weise wird ein Verstopfen der Düse beim 3D-Drucken weitestgehend ausgeschlossen, was ein kontinuierliches 3D-Drucken ermöglicht. Ein Pausieren oder Stoppen des Druckprozesses zum Befreien der Düse von Verstopfungen ist somit nicht erforderlich. Die erfindungsgemässe Kartusche ermöglicht ein effizientes und zügiges 3D-Drucken von Zahnersatzteilen. Diese Zahnersatzteile können provisorische oder finale Zahnersatzteile darstellen. Die erfindungsgemässe Kartusche ermöglicht ein kostengünstiges Drucken durch einen Zahnarzt (chair side) innerhalb kurzer Zeit, so dass ein Patient in einer Konsultation komplett versorgt werden kann.

Die Kartusche kann ein Grössenverhältnis des Düsendurchmessers der Kartusche zur grössten Partikelgrösse des Kompositmaterials von 10:1, bevorzugt 30:1, besonders bevorzugt 50:1, aufweisen. Der Düsendurchmesser kann dabei im Bereich von 50 bis 300 µm, bevorzugt 100 bis 250 µm, besonders bevorzugt 150 bis 200 µm, liegen. Durch das entsprechend gewählte Verhältnis aus Düsendurchmesser der Kartusche zur grössten Partikelgrösse des Kompositmaterials wird ein Verstopfen und damit ein Abbrechen bzw. Unterbrechen des 3D-Drucks verhindert.

Die Kartusche kann weiter einen Kolben zum Verdrängen des Kompositmaterials durch die Düse aus der Kartusche aufweisen. Auf diese Weise kann das Kompositmaterial anforderungsgemäss aus der Kartusche verdrängt und an einer Zielstelle abgelegt werden.

Ebenso kann die Kartusche ein Sieb aufweisen, welches vor dem Austritt der Düse angeordnet ist. Wird das Kompositmaterial aus der Kartusche verdrängt, so wird dieses durch das Sieb hindurchgeleitet. Dabei ist das Sieb im Inneren der Kartusche angeordnet, um das Kompositmaterial vor dem Erreichen der Düse zu filtern. Auf diese Weise werden Agglomerate von Füllstoffpartikeln, die sich in der Kartusche gebildet haben können, von der Düse ferngehalten und ein Verstopfen der Düse verhindert. Das Sieb kann eine Porengrösse im Bereich von 5 bis 1000 µm, bevorzugt 10 bis 500 µm, besonders bevorzugt 20 bis 100 µm aufweisen. So kann das System aus Durchmesser der Düsenöffnung, maximaler Partikelgrösse der Füllstoffe und Porengrösse des Siebs derart eingestellt werden, dass ein effizientes 3D-Drucken von Zahnersatzteilen ermöglicht ist.

Des Weiteren kann die Kartusche eine Abdeckung aufweisen, welche allgemein den Inhalt der Kartusche vor der Umgebung schützt. Insbesondere kann mittels einer solchen Abdeckung ein ungewolltes Betätigen des Kolbens zum Verdrängen des Kompositmaterials ausgeschlossen werden.

Die Kartusche kann derart ausgestaltet sein, dass eine Düse durch Anschneiden oder durch Punktieren, insbesondere mittels eines Lasers, ausbildbar ist. Derart wird eine Düse bzw. eine Düsenöffnung mit einer anforderungsgemäss definierten Grösse zur Verfügung gestellt.

Die Kartusche kann weiter mindestens ein Dichtelement aufweisen. Dabei ist das Dichtelement derart ausgestaltet, dass die Kartusche gegenüber einem an der Kartusche anordenbaren Presselement zum Verdrängen des Kompositmaterials abdichtbar ist. Ein derartiges Presselement kann zum Einwirken auf den Kolben ausgestaltet sein. Insbesondere kann das Presselement ein mit Pressluft betriebenes, hydraulisches oder ein mechanisches Presselement sein, welches an der Kartusche anordenbar ist. Das Dichtelement kann eine Dichtung in Form eines O-Rings, beispielsweise aus einem deformierbaren Material, sein. Ebenso kann eine Dichtwirkung durch eine Kerbe auf der Kartusche erzielt werden. Hierbei ist das Material des Pressstempels im Vergleich zum Material der Kartusche härter, wodurch eine Kerbe und damit eine Dichtwirkung an der Kartusche erzielt wird. Prinzipiell sind auch umgekehrte Materialeigenschaften denkbar, jedoch weniger bevorzugt.

Das mindestens eine Dichtelement kann an einem äusseren Bereich der Kartusche bevorzugt auf einer oberen Abdeckung angeordnet sein. Alternativ kann es in einem inneren Bereich der Kartusche oberhalb des Presselements, welches an einen Reservoirbereich angrenzt, angeordnet sein. Dabei enthält der Reservoirbereich das Kompositmaterial. Auf diese Weise wird ein effizientes Abdichten des inneren Bereichs der Kartusche gegenüber der Umgebung erreicht und damit ein kontrolliertes Ablegen von Kompositmaterial aus der Kartusche durch die Düse hindurch ermöglicht. Die Kartusche umfasst eine das Reservoir vollständig umlaufende Wand. Im Betriebszustand kann die Düse bzw. die Düsenöffnung unterhalb der Wand des Reservoirs angeordnet sein. Die umlaufende Wand bildet so eine Aufnahme für den Kolben. Die Wand kann zylindrisch ausgestaltet sein. Alternativ kann die Wand einen Sockel, beispielsweise zur Aufnahme eines Dichtelements, insbesondere eines O-Rings, aufweisen. Prinzipiell kann das Dichtelement auch ohne einen Sockel in einem Innenbereich, beispielsweise in einem im Betriebszustand oberen Bereich der Kartusche oder in einem Bereich der oberen Begrenzung der Kartusche angeordnet sein. Die Wand der Kartusche kann auch zwei funktionell unterschiedliche Bereiche aufweisen. Ein erster Bereich ist dabei zur Aufnahme des Presselements, insbesondere eines Pressluftstutzens, zum Bewegen des Kolbens und zur Aufnahme des Dichtelements ausgestaltet. Der zweite Bereich bildet dabei zumindest teilweise das Reservoir zur Aufnahme des Kompositmaterials und des Kolbens. Auf diese Weise kann im Betriebszustand eine vorteilhafte Dichtwirkung der Kartusche gegenüber der Umgebung erreicht werden.

Die Kartusche und das mindestens eine Dichtelement sind mittels Koextrusion oder mittels Tiefzieh-Verfahren herstellbar. Alternativ kann das mindestens eine Dichtelement auch durch Anspritzen an die vorgefertigte Kartusche hergestellt werden.

Die Kartusche kann derart ausgestaltet sein, dass die Kartusche formschlüssig in oder an einer korrespondierenden Einheit eines 3D-Drucker positionierbar ist. Dies kann vorzugsweise über eine Indexierung in Form einer Aussparung oder eines Vorsprungs erreicht werden, wobei an dem 3D-Drucker eine im Wesentlichen formkomplementäre Aussparung oder Vorsprung vorhanden ist. Derart ist eine Fehlverwendung im Sinne eines Einlegens und Verwendens einer nicht geeigneten Kartusche ausgeschlossen.

Die Kartusche kann eine Wärmeleitfähigkeit von 0.1 bis 400 W/mK, bevorzugt 0.2 bis 250 W/mK, besonders bevorzugt 70 bis 250 W/mk aufweisen. Auf diese Weise kann ein effizienter Wärmeeintrag von einer Heizeinheit auf die Kartusche erfolgen, welche in oder an der zu der Kartusche korrespondierenden Einheit des 3D-Drucker angeordnet ist. Mittels des Wärmeeintrags können die Fliesseigenschaften des Kompositmaterials in der Kartusche optimal bzw. anforderungsgemäss eingestellt werden.

Ein weiterer Aspekt der Erfindung betrifft ein Stützmaterial für den 3D-Druck von Dentalteilen aus Kompositmaterial wie vorgängig erläutert. Das Stützmaterial kann derart ausgestaltet sein, dass es im Wesentlichen Sauerstoff-undurchlässig und insbesondere biokompatibel ist. Unter biokompatibel wird hier und im Folgenden die Eigenschaft verstanden, dass ein Material keinen negativen Einfluss auf Lebewesen in seiner Umgebung nach ISO 10993 1-20:2009 hat. Auf diese Weise kann das Stützmaterial im 3D-Druck bei der Herstellung von insbesondere medizinischen und zahnmedizinischen Ersatzteilen im 3D-Druck eingesetzt werden. Aufgrund der Sauerstoff-Undurchlässigkeit wird abgelegtes Kompositmaterial, welchem das erfindungsgemässe Stützmaterial aufgelagert ist, vom Umgebungssauerstoff abgeschirmt.

Das Stützmaterial kann alternativ oder zusätzlich zur vorstehend beschriebenen Undurchlässigkeit für Sauerstoff im Wesentlichen durchlässig für elektromagnetische Strahlung im Wellenlängenbereich von 100 bis 1000 nm, bevorzugt 200 bis 800 nm, besonders bevorzugt 300 bis 500 nm, sein. Auf diese Weise kann eine Aushärtung des Kompositmaterials durch eine oder mehrere aufgelagerte Schichten des Stützmaterials erfolgen. Die vorgängig erläuterte Sauerstoff-Undurchlässigkeit des Stützmaterial ermöglicht zudem, dass die äusserste Schicht des Kompositmaterials ausgehärtet werden kann, wenn dieser Stützmaterial aufgelagert ist, da das Kompositmaterial nicht im Kontakt mit Umgebungssauerstoff steht.

Das Stützmaterial kann derart ausgestaltet sein, dass es nicht mit dem eigesetzten Kompositmaterial reagiert. Um also eine optimale Ablösbarkeit zu gewährleisten, ist das Stützmaterial derart ausgestaltet, dass das Stützmaterial keine irreversible chemische Bindungen mit dem Kompositmaterial ausbilden kann.

Das Stützmaterial kann ausgewählt sein aus der Listebestehend aus Polystyrol; Polyphenylsulfon; Wachs; wasserlösliche Polymere, insbesondere Acrylat-Copolymere oder Polyvinylalkohole; weichelastische, gelartige Massen, insbesondere Silikone oder Polyurethane; wasserlösliches standfestes Gel.

Ein weiterer Aspekt der Erfindung betrifft ein Verfahren zur Aushärtung von mindestens einem Kompositmaterial umfassend die Schritte Bereitstellen eines auszuhärtenden Kompositmaterials bevorzugt mittels eines additiven Verfahrens, besonders bevorzugt mittels 3D-Druck; teilweise oder vollständiges Umhüllen des Kompositmaterials mit einem Stützmaterial wie vorgängig erläutert; Aushärten des Kompositmaterials mit elektromagnetischer Strahlung mit einer Wellenlänge im Bereich von 100 bis 1000 nm, bevorzugt 200 bis 800 nm, besonders bevorzugt 300 bis 500 nm, für welchen das Stützmaterial im Wesentlichen durchlässig ist; und Entfernen des Stützmaterials. Auf diese Weise wird ein Verfahren zur Verfügung gestellt, wobei ein vollständiges Aushärten aller Schichten des Kompositmaterials möglich ist. Bei herkömmlichen Verfahren härtet die äusserste Schicht des Kompositmaterials, welche selbst eine Art Sauerstoffbarriere bildet, nicht aus und muss nach dem Aushärten der darunterliegenden Schichten entfernt werden. Die Sauerstoffbarriere bildet im erfindungsgemässen Verfahren das aufgetragene Stützmaterial. Es muss somit für den 3D-Druck kein überschüssiges Kompositmaterial aufgetragen werden, welches anschliessend entfernt werden müsste. Selbstverständlich kann ein Kompositmaterial oder mehrere Kompositmaterialien, welche sich insbesondere in ihrer Zusammensetzung wie beispielsweise Schmelzmasse, Dentinmasse, Effektfarbe unterscheiden, für das erfindungsgemässe Verfahren bereitgestellt sein.

Ein weiterer Aspekt der Erfindung betrifft ein Verfahren zur generativen Herstellung, insbesondere 3D-Druck, von Zahnersatzteilen. Das Verfahren umfasst den Schritt des Auspressens und Härtens von Kompositmaterial aus mindestens einer Kartusche derart, dass ein Zahnersatzteil gebildet wird. Die Kartusche ist dabei wie vorgängig erläutert ausgestaltet. Auf diese Weise werden die Vorteile der vorgängig beschriebenen Kartusche in einem Verfahren zur generativen Herstellung von Zahnersatzteilen nutzbar gemacht. Selbstverständlich kann eine Kartusche oder mehrere Kartuschen, insbesondere mit unterschiedlichen Inhalten, für das erfindungsgemässe Verfahren bereitgestellt sein. Sind mehrere Kartuschen bereitgestellt, so weisen diese insbesondere unterschiedliche Kompositmaterialien wie vorgängig erläutert auf. Die eine Kartusche oder die mehreren Kartuschen können über eine CAM-Software gesteuert werden.

In dem vorgängig beschriebenen Verfahren kann des Weiteren ein Stützmaterial bereitgestellt sein, welches wie vorgängig erläutert ausgestaltet ist. Das Stützmaterial wird dabei zum Stützen komplexer Strukturen vorgelegt. Entsprechend wird auf das vorgelegte Stützmaterial Kompositmaterial, welches das Zahnersatzteil bildet, abgelegt. Auf diese Weise können komplexe Strukturen im generativen Verfahren, insbesondere im 3D-Druck, ausgebildet werden.

Das vorgängig beschriebene Verfahren kann des Weiteren die Schritte Bereitstellen eines Stützmaterials wie vorgängig erläutert; teilweise oder vollständiges Umhüllen des abgelegten Kompositmaterials mit dem Stützmaterial; Aushärten des Kompositmaterials mittels elektromagnetischer Strahlung mit einer Wellenlänge im Bereich von 100 bis 1000 nm, bevorzugt 200 bis 800 nm, besonders bevorzugt 300 bis 500 nm, durch das Stützmaterial hindurch, umfassen. Auf diese Weise wird ein teilweise oder vollständig mit Stützmaterial umhülltes, abgelegtes Kompositmaterial in einem definierten Wellenlängenbereich vorteilhaft ausgehärtet, wobei auch die an das Stützmaterial angrenzende Schicht des Kompositmaterials ausgehärtet wird. Somit ist ein anschliessender Materialverlust, welches herkömmlicherweise beim Entfernen der äussersten, nicht-ausgehärteten Kompositmaterialschicht stattfindet, ausgeschlossen. Entsprechend muss zur Herstellung eines Zahnersatzteils kein überschüssiges Material aufgetragen werden. Dies erhöht die Fertigungszeit, erlaubt eine präzise Fertigung, reduziert die entstehenden Materialkosten und macht einen Entfernungsschritt der äusseren nicht-ausgehärteten Schicht unnötig. Selbstverständlich kann ein Stützmaterial oder mehrere, insbesondere unterschiedliche, Stützmaterialien für das erfindungsgemässe Verfahren bereitgestellt sein.

Das Verhältnis aus Viskosität des Kompositmaterials im unausgehärteten Zustand zum Düsendurchmesser kann im Bereich von 0.033 bis 40 Pa*s/µm, bevorzugt 0.5 bis 10.0 Pa*s/µm, besonders bevorzugt 0.8 bis 5.0 Pa*s/µm liegen. Auf diese Weise ist ein Verstopfen der Düse ausgeschlossen und eine optimale Handhabbarkeit des Kompositmaterials gewährleistet. Dies reduziert die Störanfälligkeit, optimiert so die Fertigungszeit und reduziert die Herstellungskosten. Allgemein kann die Viskosität des Kompositmaterials im unausgehärteten Zustand im Bereich von 10 bis 2000 Pa*s liegen. Allgemein kann der Düsendurchmesser im Bereich von 50 bis 300 µm liegen.

Ein weiterer Aspekt betrifft die Verwendung einer Kartusche wie vorgängig erläutert zur generativen Herstellung von Zahnersatz, insbesondere mittels 3D-Druckverfahren.

Ein weiterer Aspekt betrifft die Verwendung von Stützmaterial wie vorgängig erläutert in einem additiven Verfahren, insbesondere im 3D-Druck.

Ein weiterer Aspekt betrifft ein Kit-of-parts, im Sinne eines Systems, umfassend die Komponente a., die optionale Komponente b. und die Komponente c. Komponente a. umfasst eine Kartusche. Insbesondere umfasst die Komponente a. mehrere Kartuschen mit unterschiedlichen Kompositmaterialien. Dabei unterscheiden sich einzelne der mehreren Komposite in Farbe und/oder Transluzenz uns/oder bezüglich der Füllstoffzusammensetzung, insbesondere zum Einstellen unterschiedlicher mechanischer Eigenschaften oder Glanzbeständigkeit. Die optionale Komponente b. umfasst ein Stützmaterial insbesondere mehrere Stützmaterialien. Dabei unterscheiden sich einzelne der mehreren Stützmaterialien in den durchlässigen Wellenlängenbereichen und/oder der Viskosität. Die Komponente c. umfasst Anwendungshinweise zur Herstellung von Zahnersatz.

Im Rahmen der Erfindung bevorzugte Kompositmaterialien sind die folgenden:
A. Dentales Kompositmaterial umfassend
   a. eine aushärtbare, insbesondere lichtaushärtbare, Matrix
   b. nur Füllstoffe mit einer maximalen Partikelgrösse von < 5 µm,
   wobei das dentale Kompositmaterial in nicht-ausgehärtetem Zustand eine Viskosität im Bereich von 1 - 10'000 Pa*s, bevorzugt von 10 - 2000 Pa*s, besonders bevorzugt 50 - 800 Pa*s aufweist, insbesondere gemäss Bestimmung der Viskosität im Rheometer wie nachstehend in den Ausführungsbeispielen erläutert.
B. Dentales Kompositmaterial gemäss A, wobei das Material der Matrix Monomerer umfasst ausgewählt aus der Gruppe umfassend BisGMA, BisEMA, UDMA, EGDMA, DEGDMA, TEGDMA, TCD-Di-HEA, Isobornylmethacrylat.
   Diese Auswahl ist nicht abschliessend und es können durchaus weitere Monomere, insbesondere Acrylatmonomere zugefügt werden. Diese können mono-, di- oder trifunktional, aromatisch, cycloaliphatisch, herterocylisch, linear oder verzweigt sein.
C. Dentales Kompositmaterial gemäss A oder B, wobei die Füllstoffe ausgewählt sind aus der Liste
   a. gemahlenes Dentalglas aus Glaskeramik, wobei Partikel mit einer Grösse > 5µm abgetrennt sind;
   b. gemahlene Glaskeramik, wobei Partikel mit einer Grösse > 5µm abgetrennt sind;
   c. kugelförmige Silikate mit Partikelgrössen im Bereich von 0.1 bis 1 µm;
   d. aggregierte Nanopartikel, beispielsweise pyrogene Kieselsäure;
   e. nicht aggregierte Nanopartikel auf Basis von SiO₂, oder auf Basis von Mischoxiden aus Si, Sr, Y, Zr, Nb, Ba, La, Hf, Ta, Yb, Ce; hergestellt nach Sol-Gel Verfahren oder Flammpyrolyse f. nicht agglomerierte Partikel auf Basis von Ytterbiumfluorid.
   Unter e. angeführte Nanopartikel sind beispielsweise als Levasil 200A/40% von Bayer erhältlich.
D. Dentales Kompositmaterial gemäss A, B oder C, wobei der Füllstoff einen Gewichtsprozentanteil des Kompositmaterials im Bereich von 20-90 Gew.-%, bevorzugt 40-80 Gew.-%, besonders bevorzugt 55-75 Gew.-%, aufweist.
E. Dentales Kompositmaterial gemäss A, B, C oder D, wobei der Füllstoff agglomerierte und/oder nicht-agglomerierte Nanopartikel aufweist.
F. Dentales Kompositmaterial gemäss A, B, C, D oder E umfassend Photoinitiatoren ausgewählt aus der Liste Campherchinon, Acylphosphinoxide wie bspw. Lucirin TPO, Phenylbis(2,4,6-trimethylbenzoyl)-phosphine oxide (BAPO); Gemaniumverbinungen.
   Dabei können die Photoinitiatoren auf die Lichtquelle am 3D Drucker abgestimmt werden, beispielsweise Campherchinon für Blaulichthärtung mit einem Strahlungsmaximum im Bereich von 450 bis 470 nm; Acylphosphinoxide wie beispielsweise Lucirin TPO, BAPO für Violett/UV Härtung mit Strahlungsmaximum im Bereich von 380 bis 400 nm; Germaniumverbindungen wie DBDEGe. BAPO ist beispielsweise als Irgacure 819 von CIBA erhältlich.
G. Verfahren zur Herstellung von dentalem Kompositmaterial, wobei in eine aushärtbare, insbesondere lichtaushärtbare Matrix ein Füllstoff eingearbeitet wird, wobei die maximale Partikelgrösse des Füllstoffes < 5 µm ist.
H. Verfahren gemäss G umfassend ein Fraktionierungsverfahren ausgewählt aus der Liste Sichten im Wirbelbett, Nassfiltration, Sedimentation, Zentrifugation.
   Für die Nassfiltration kann als Lösungsmittel destilliertes Wasser eingesetzt werden. Anschliessend wird das Lösungsmittel durch Zentrifugieren reduziert. Der Füllstoff muss aber nicht vollständig vom Lösungsmittel befreit werden.
I. Verfahren zur Aufarbeitung eines Füllstoffes zur Einarbeitung in einem Kompositmaterial gemäss A bis H oder zur Verwendung in einem Verfahren gemäss F oder G umfassend die Schritte
   a. Bereitstellung eines Füllstoffes, der frei ist von Partikeln > 5 µm,
   b. Abtrennen von Partikeln > 5 µm, sodass ein Füllstoff mit einer maximalen Partikelgrösse von < 5 µm erhalten wird.

Wird das Abtrennen in einer wässrigen Suspension bewerkstelligt, so wird das Wasser durch Zentrifugieren grösstenteils entfernt. Für eine gute Verbindung von Harz und Füller kann der Füllstoff silanisiert sein. Eine Nass-Silanisierung wird dabei bevorzugt, da durch die wegfallende Trocknung keine Agglomerate des Füllstoffes entstehen. Als Massnahme zur Verhinderung von Agglomeraten des Füllstoffes kann während dem Silanisieren zusätzlich Ultraschall appliziert werden. Die Paste, aus welcher das dentale Kompositmaterial herstellbar ist, kann mittels zwei Flügelknetern und/oder einem Dreiwalzenstuhl geknetet und homogenisiert werden. Da die Luftfreiheit Grundvoraussetzung für einen stabilen Druckprozess ist, wird das dentale Kompositmaterial anschliessend entlüftet. Dies geschieht beispielsweise in den Flügelknetern und/oder in einer Zentrifuge.

### AUSFÜHRUNGSBEISPIELE

Die nachfolgende Tabelle zeigt eine erste erfindungsgemässe Zusammensetzung eines Kompositmaterials.

| | | |
|---|---|---|
| Ba Glas 0.2 µm, silanisiert | 53 Gew.% | GM27884 NF180 (Schott) |
| Pyrogene Kieselsäure | 2 Gew.% | Aerosil R711 (Degussa) |
| Nano SiO₂ | 10 Gew.% | Levasil 200A/40% (Bayer) |
| BisGMA | 16 Gew.% | Bisphenol A glycerolate dimethacrylate, 494356 (Sigma Aldrich) |
| BisEMA | 14 Gew.% | 2.2-bis 4-methacryloxyethoxy phenyl propan, Sartomer SR101 (Arkema) |
| TEGDMA | 4 Gew.% | Triethylene glycol dimethacrylate, 261548 (Sigma Aldrich) |
| Initiatoren und Stabilisatoren | 1 Gew.% | |

Die nachfolgende Tabelle zeigt eine zweite erfindungsgemässe Zusammensetzung eines Kompositmaterials.

| | | |
|---|---|---|
| Ba Glas 0.7 µm, silanisiert | 55 Gew.% | EG 2738 0.7 (Ferro Corporation) |
| Pyrogene Kieselsäure | 2 Gew.% | Aerosil R711 (Degussa) |
| Nano SiO₂ | 10 Gew.% | Levasil 200A/40% (Bayer) |
| BisGMA | 15 Gew.% | Bisphenol A glycerolate dimethacrylate, 494356 (Sigma Aldrich) |
| BisEMA | 13 Gew.% | 2.2-bis 4-methacryloxyethoxy phenyl propan, Sartomer SR101 (Arkema) |
| TEGDMA | 4 Gew.% | Triethylene glycol dimethacrylate, 261548 (Sigma Aldrich) |
| Initiatoren und Stabilisatoren | 1 Gew.% | |

### BESTIMMUNG DER VISKOSITÄT

Die Viskosität wird im Rahmen der Erfindung wie vorstehend erwähnt in einem StressTech-Rheometer von ATS RheoSystems bestimmt. Die Standfestigkeit eines Materials zeigt sich ungefähr bei Schergeschwindigkeiten von 0.01s⁻¹ bis 10s⁻¹. Da die Vorgabe von derart tiefen Schergeschwindigkeiten messtechnisch schwierig ist, und bei aushärtenden Materialien im Oszillationsmodus gemessen wird, wird die Viskosität bei einer zerstörungsfreien Deformation (0.01) und 1Hz bestimmt. Das Messsystem ist eine flache Bodenplatte (plate-plate P15). Die Messung wird bei einer Temperatur von 23 °C durchgeführt. Der Spalt weist eine Tiefe von 1 mm auf. Für das Auftragen der Probe wurde eine Flow Spritze mit Applikationsnadel verwendet. Die Einstellungen am StessTech-Rheometer sind nachfolgend aufgeführt:

| | |
|---|---|
| Methode | Oszillation Deformation |
| Messsystem | P15 |
| Messtemperatur | 23°C |
| | |
| Steuerung Normalkraft | |
| Ladevorgang | Methode: auf Spalt |
| | Max. Normalkraft: 5.00 N |
| Ausgleich | Messbeginn wenn unter 5.65 N |
| | Max. Dauer: 1000 s |
| Probe trimmen | inaktiv |
| Probenhöhe | 1 mm |
| Einheit | N |
| | |
| Frequenz und Deformation | |
| Frequenz | 1 Hz |
| Verzögerung | 1s |
| Integrationsperiode 1 | |
| Deformation | 0.01 |
| Grösse | 512 |
| 1.Stress | 10 Pa |
| Kontinuierlich | aktiv |
| | |
| Temperatur und Zeit | |
| Vorscheren | inaktiv |
| Ausgleichszeit | inaktiv |
| Anzahl Messungen | 10 |
| Messintervall | 1 s |
| T nach Messung manuell eingegebener Wert | |
| | |
| Zusatzfunktionen | |
| Auflösung | 4 rad |
| Deformationsgrenzwert | 1% |
| Max. Anz. Iterat. | 5 |
| Vorhergehender Wert wird verwendet. | |

Nachfolgend wird die Erfindung anhand von Figuren näher erläutert.

Es zeigen:
- Figur 1:: Eine Seitenansicht der erfindungsgemässen Kartusche;
- Figur 2:: Einen vertikalen Schnitt der erfindungsgemässen Kartusche;
- Figur 3:: Eine Ansicht der erfindungsgemässen Kartusche von oben;
- Figur 4:: Einen Schnitt einer erfindungsgemässen Kartusche mit Dichtelementen in einem 3D-Drucker;
- Figur 5:: Einen Schnitt einer erfindungsgemässen Kartusche mit einer weiteren Anordnung eines Dichtelements;
- Figur 6:: Einen Schnitt einer erfindungsgemässen Kartusche mit einer weiteren Anordnung eines Dichtelements;
- Figur 7:: Einen Schnitt einer weiteren Ausführungsform einer erfindungsgemässen Kartusche.

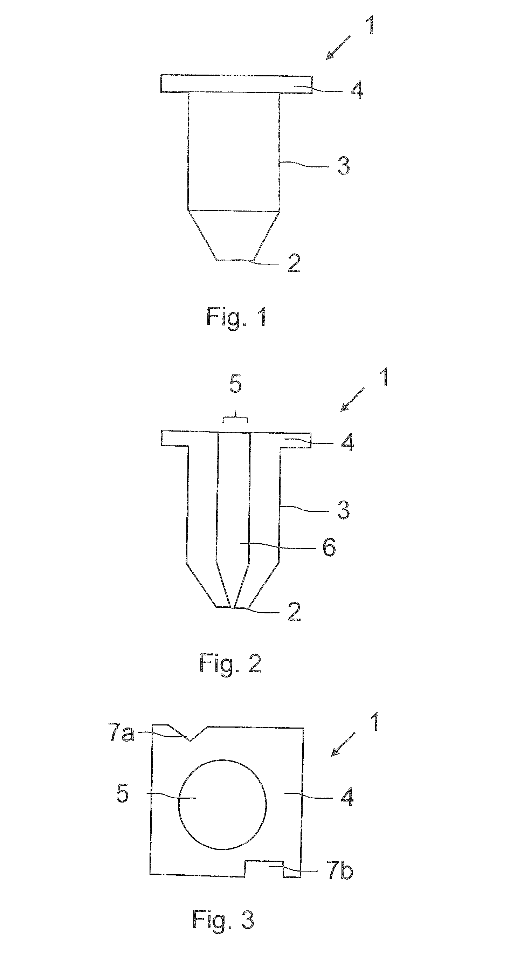

Figur 1 zeigt eine erfindungsgemässe Kartusche 1 in einer Seitenansicht. Die Kartusche 1 umfasst eine Düsenöffnung 2, eine Wand 3 und eine obere Begrenzung 4. Im unteren Bereich, welcher in der Düsenöffnung 2 endet, ist die Wand 3 abgeschrägt und läuft zusammen. Im oberen Bereich ist die Wand 3 zylindrisch ausgestaltet und bildet so ein Reservoir für ein Kompositmaterial (vgl. Figuren 2 bis 4). Die obere Begrenzung 4 der Kartusche 1 sorgt für eine Kontaktierung eines 3D-Druckers.

Die Figur 2 zeigt einen Schnitt einer erfindungsgemässen Kartusche 1. Die Kartusche 1 umfasst eine Düsenöffnung 2, eine Wand 3 und eine obere Begrenzung 4. Die Begrenzung 4 weist eine Aussparung zur Aufnahme eines Presselements auf. Das Reservoir 6, welches von der die Aussparung 6 umlaufenden Wand 3 gebildet wird, weist ein Kompositmaterial und einen Kolben auf (nicht gezeigt). Mittels der Aussparung 5 wird ein Presselement von der Kartusche aufgenommen, welches den Kolben innerhalb der Kartusche in Richtung der Düsenöffnung 2 verschieben kann. Auf diese Weise kann das Kompositmaterial des Reservoirs 6 der Kartusche 1 durch die Düsenöffnung 2 hindurch ausgelassen werden.

Figur 3 zeigt eine Ansicht der erfindungsgemässen Kartusche von oben. Die obere Begrenzung 4 weist die Aussparung 5 auf (vgl. Figur 2). Des Weiteren sind ein erster Index 7a und ein zweiter Index 7b gezeigt. Die Kartusche 1 kann selbstverständlich auch nur einen der gezeigten Indices aufweisen. Mittels des Indexes 7a und/oder des Indexes 7b wird eine Fehlverwendung der Kartusche 1 in einem 3D-Drucker vermieden. Der Index 7a und/oder der Index 7b wird dabei in ein entsprechendes Gegenstück positioniert. Weist also eine eingelegt Kartusche den zu dem 3D-Drucker, bzw. der Aufnahme der Kartusche am 3D-Drucker, passenden Index nicht auf, so ist eine Verwendung der Kartusche ausgeschlossen. Der Index oder die Indices der Kartusche bilden dementsprechend eine Schnittstelle für einen 3D-Drucker.

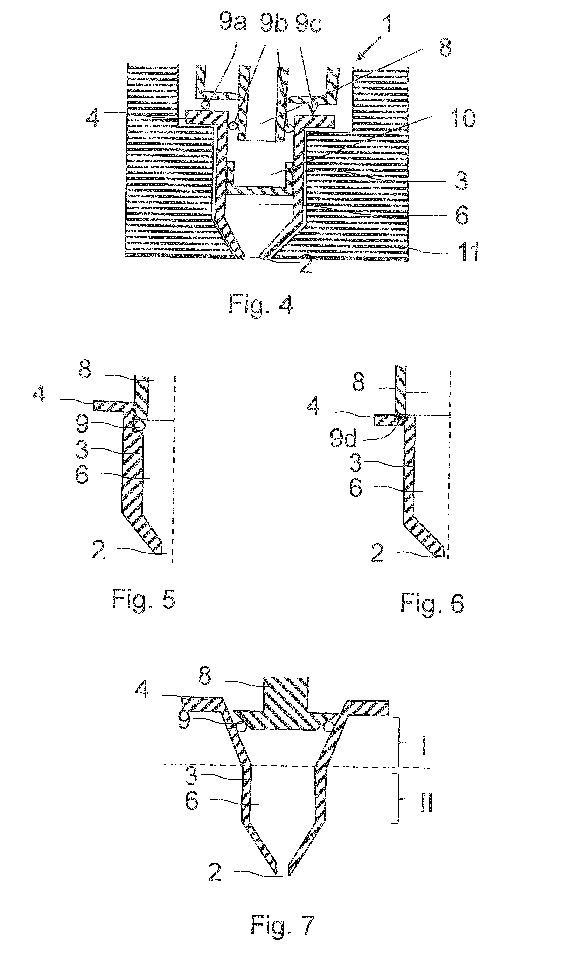

Figur 4 zeigt einen Schnitt einer erfindungsgemässen Kartusche 1 in einem 3D-Drucker 11. Gezeigt sind ebenfalls die Dichtelemente 9a, 9b und 9c. Die erfindungsgemässe Kartusche 1 kann selbstverständlich nur eines oder mehrere der gezeigten Dichtelemente aufweisen. Die Dichtelement 9a und 9b sind O-Ringe. Das Dichtelement 9a ist im Aussenbereich der Kartusche 1 auf der oberen Begrenzung 4 angeordnet. Das Dichtelement 9b ist in einem inneren Bereich der Kartusche 1 an der Wand 3 angeordnet. Die Dichtelemente 9a und 9b bilden Dichtungen zwischen der Kartusche 1 und dem Presselement 8. Das Dichtelement 9c wird durch eine Kante gebildet, welche auf dem Presselement 8 angeordnet ist und eine Kerbe in das Material der Kartusche 1 schlägt. Die Presselement 9a, 9b und 9c gewährleisten eine Dichtung der Kartusche 1 und des Presselements 8 gegenüber der Umgebung. Da das Presselement 8 als Pressluft-Stutzen ausgebildet ist, ist eine Abdichtung gegenüber der Umgebung erforderlich, um den Kolben 10 in Richtung der Düsenöffnung 2 zu bewegen.

Die Figuren 5 und 6 zeigen weitere Ausführungen des Dichtelements 9, 9d der Kartusche 1. Gezeigt sind vertikale Schnitte der Kartusche 1. Zur vereinfachten Darstellung ist jeweils nur eine Hälfte der angeschnittenen Kartuschen 1 gezeigt. Das Dichtelement 9 der Kartusche 1 in Figur 5 ist ein O-Ring, welcher auf einem Sockel der Wand 3 im Inneren der Kartusche 1 angeordnet ist. Das Presselement 8, welches ein Pressluft-Stutzen ist, presst auf den O-Ring, welcher, da er durch den in der Wand 3 angeordneten Sockel in Position gehalten wird, zwischen Sockel und Stutzen verklemmt wird. Entsprechend effizient ist die erzielte Dichtwirkung. Figur 6 zeigt eine alternative Ausführung eines Dichtelement 9d, welches sich im äusseren Bereich de Kartusche 1 auf der oberen Begrenzung 4 befindet. Die entsprechende Stelle weist elastische Materialeigenschaften auf. Das Presselement 8 in Form eine Pressluft-Stutzens setzt an die elastische Stelle an und drückt diese ein, so dass eine Dichtwirkung sichergestellt ist.

Figur 7 zeigt einen vertikalen Schnitt einer erfindungsgemässen Kartusche 1. Die Kartusche 1 weist zwei Bereiche I, II der Wand 3 auf. Einen oberen ersten Bereich I, in welchem ein Dichtelement 9 in Form eines O-Rings angeordnet ist. Der erste Bereich I ist abgeschrägt. Im ersten Bereich I setzt ein Presselement 8 in Form eines Pressluft-Stutzens an das Dichtelement 9 an. Entsprechend wird eine Dichtwirkung gegenüber der Umgebung erreicht. Ein zweiter unterer Bereich II der Wand 3 ist zylindrisch ausgestaltet und dient als Reservoir, in welchem sich Kompositmaterial befindet (nicht gezeigt). Die zylindrische Ausgestaltung ermöglicht ein Verschieben eines Kolben (nicht gezeigt; vgl. Figur 4) mittels des Pressluft-Stutzens in dem zweiten unteren Bereich II der Kartusche 1 in Richtung der Düsenöffnung 2, wodurch Kompositmaterial durch die Düsenöffnung 2 hindurch ausgelassen werden kann.

## Patentansprüche

1. Kartusche für einen 3D-Drucker, wobei die Kartusche eine Düse aufweist oder derart ausgebildet ist, dass eine vordefinierte Düse ausbildbar ist, und wobei die Kartusche ein dentales Kompositmaterial enthält, wobei das Kopmpositmaterial umfasst
a. eine aushärtbare, insbesondere lichtaushärtbare, Matrix,
b. nur Füllstoffe mit einer maximalen Partikelgrösse von < 5 µm,
wobei das dentale Kompositmaterial in nicht-ausgehärtetem Zustand eine Viskosität im Bereich von 1 bis 10'000 Pa*s, bevorzugt von 10 bis 2000 Pa*s, besonders bevorzugt 50 bis 800 Pa*s, aufweist.

2. Kartusche gemäss Anspruch 1, wobei das Grössenverhältnis des Düsendurchmessers der Kartusche zur grössten Partikelgrösse des Kompositmaterials 10:1, bevorzugt 30:1, besonders bevorzugt 50:1, ist.

3. Kartusche gemäss Anspruch 1 oder 2, aufweisend einen Kolben zum Verdrängen des Kompositmaterials durch die Düse aus der Kartusche.

4. Kartusche gemäss einem der vorhergehenden Ansprüche, wobei in der Kartusche ein Sieb vor dem Austritt der Düse angeordnet ist, durch welches das Kompositmaterial beim Verdrängen aus der Kartusche hindurchleitbar ist.

5. Kartusche gemäss einem der Ansprüche 1 bis 4, wobei die Kartusche derart ausgestaltet ist, dass eine Düse durch Anschneiden oder durch Punktieren, insbesondere mittels eines Lasers, ausbildbar ist.

6. Kartusche gemäss einem der Ansprüche 1 bis 5 aufweisend mindestens ein Dichtelement, wobei das Dichtelement derart ausgestaltet ist, dass die Kartusche gegenüber einem an der Kartusche anordenbaren Presselement zum Verdrängen des Kompositmaterials abdichtbar ist.

7. Kartusche gemäss Anspruch 6, wobei das mindestens eine Dichtelement an einem äusseren Bereich der Kartusche oder in einem inneren Bereich der Kartusche oberhalb des Presselements, welches an einen Reservoirbereich angrenzt, wobei der Reservoirbereich das Kompositmaterial enthält, angeordnet ist.

8. Kartusche gemäss einem der Ansprüche 1 bis 7, wobei die Kartusche eine Wärmeleitfähigkeit von 0.1 bis 400 W/mK, bevorzugt 0.2 bis 250 W/mK, besonders bevorzugt 70 bis 250 W/mk aufweist.

9. Stützmaterial für den 3D-Druck von Dentalteilen aus Kompositmaterial, insbesondere gemäss einem der Ansprüche 1 bis 8, wobei das Stützmaterial derart ausgestaltet ist, dass es
i) im Wesentlichen Sauerstoff-undurchlässig ist; oder im Wesentlichen durchlässig ist für elektromagnetische Strahlung im Wellenlängenbereich von 100 bis 1000 nm, bevorzugt 200 bis 800 nm, besonders bevorzugt 300 bis 500 nm;
ii) insbesondere biokompatibel ist.

10. Verfahren zur Aushärtung von Kompositmaterial umfassend die Schritte
- Bereitstellen mindestens eines auszuhärtenden Kompositmaterials bevorzugt mittels eines additiven Verfahrens, besonders bevorzugt mittels 3D-Druck;
- teilweise oder vollständiges Umhüllen des Kompositmaterials mit einem Stützmaterial, insbesondere gemäss Anspruch 9;
- Aushärten des Kompositmaterials mit elektromagnetischer Strahlung mit einer Wellenlänge im Bereich von 100 bis 1000 nm, bevorzugt 200 bis 800 nm, besonders bevorzugt 300 bis 500 nm, wobei das Stützmaterial im Wesentlichen für die elektromagnetische Strahlung dieser Wellenlänge durchlässig ist;
- Entfernen des Stützmaterials.

11. Verfahren zur generativen Herstellung, insbesondere 3D-Druck, von Zahnersatzteilen umfassend den Schritt des Auspressen und Härtens von Kompositmaterial aus mindestens einer Kartusche gemäss einem der Ansprüche 1 bis 8 derart, dass ein Zahnersatzteil gebildet wird.

12. Verfahren gemäss Anspruch 11, wobei des Weiteren ein Stützmaterial gemäss Anspruch 9 bereitgestellt wird, welches zum Stützen komplexer Strukturen vorgelegt wird.

13. Verfahren gemäss Anspruch 12, umfassend die Schritte
- Bereitstellen eines Stützmaterials gemäss Anspruch 9 in einer Kartusche;
- teilweise oder vollständiges Umhüllen des abgelegten Kompositmaterials mit dem Stützmaterial,
- Aushärten des Kompositmaterials mittels elektromagnetischer Strahlung mit einer Wellenlänge im Bereich von 100 bis 1000 nm, bevorzugt 200 bis 800 nm, besonders bevorzugt 300 bis 500 nm, durch das Stützmaterial hindurch.

14. Verfahren gemäss einem der Ansprüche 10 bis 13, wobei das Verhältnis aus Viskosität des Kompositmaterials im unausgehärteten Zustand zum Düsendurchmesser im Bereich von 0.033 bis 40 Pa*s/µm, bevorzugt 0.5 bis 10.0 Pa*s/µm, besonders bevorzugt 0.8 bis 5.0 Pa*s/µm liegt.

15. Verwendung einer Kartusche gemäss einem der Ansprüche 1 bis 8 zur generativen Herstellung von Zahnersatz, insbesondere mittels 3D-Druckverfahren.

16. Verwendung von Stützmaterial gemäss Anspruch 9 in einem additiven Verfahren, insbesondere im 3D-Druck.

17. Kit-of-parts umfassend
a. eine Kartusche gemäss einem der Ansprüche 1 bis 8, insbesondere mehrere Kartuschen gemäss einem der Ansprüche 1 bis 8 mit unterschiedlichen Kompositmaterialien, wobei sich einzelne der mehreren Komposite in Farbe und/oder Transluzenz und/oder bezüglich der Füllstoffzusammensetzung unterscheiden;
b. optional: ein Stützmaterial gemäss Anspruch 9, insbesondere mehrere Stützmaterialien gemäss Anspruch 9, wobei sich einzelne der mehreren Stützmaterialien in den durchlässigen Wellenlängenbereichen und/oder der Viskosität unterscheiden,
b. Anwendungshinweise zur Herstellung von Zahnersatz.
